# EUROPÄISCHE PATENTANMELDUNG

(11) **EP 1 235 460 A1**
(43) Veröffentlichungstag der Anmeldung: **28.08.2002**
(21) Anmeldenummer: 01440047.7
(22) Anmeldetag: 26.02.2001
(51) Int. Cl.: H04Q 11/00, G02B 6/12

(54) **Signalüberwachung bei einem optischen Crossconnect**

(71) Anmelder: ALCATEL, 75008 Paris (FR)
(72) Erfinder: Weis, Bernd X., Dr.-Ing., 70825 Korntal (DE)
(74) Vertreter: Urlichs, Stefan, Dipl.-Phys.

(57) **Zusammenfassung**

Einem optischer Crossconnect (OCX) enthält eine optische Schaltmatrix (A, S) auf Basis der MEM-Technologie, die zum Schalten von optischen Verbindungen dient. Die Schaltmatrix (A) besteht aus einer Vielzahl von jeweils im Lichtweg der einzelnen optischen Verbindungen angeordneten beweglichen Miniaturspiegeln (M) mit reflektierender Beschichtung (RL). Zum Erzeugen eines Überwachungssignals für jedes der zu schaltenden optischen Nachrichtensignale wird an zumindest einem Teil der Miniaturspiegel (M) ein durch die reflektierende Beschichtung (RL) durchdringender Lichtanteil (THRU) detektiert. Dazu weist der Miniaturspiegel (M) eine unter der lichtreflektierenden Schicht (RL) angeordnete photoempfindliche Schicht (PL) auf, die auf durch die lichtreflektierende Schicht durchdringende Lichtanteile (THRU) anspricht, um das Uberwachungssignal zu erzeugen.

## Beschreibung

Die Erfindung betrifft die Signalüberwachung in einem auf MEM-Technologie basierenden optischen Crossconnect. Im einzelnen betrifft die Erfindung einen Miniaturspiegel nach dem Oberbegriff des Anspruchs 1, einen optischen Crossconnect nach dem Oberbegriff des Anspruchs 4, eine optische Schaltmatrix nach dem Oberbegriff des Anspruchs 5 und ein Verfahren nach dem Oberbegriff des Anspruchs 6.

Im Bereich der Nachrichtenübertragung wird mit zunehmenden Datenmengen und Übertragungsraten das Schalten optischer Nachrichtensignale zu einer Schlüsselfunktion. Derzeit werden optische Nachrichtensignale meist elektrisch verarbeitet und geschaltet, jedoch werden in Zukunft rein optische Lösungen an Bedeutung gewinnen. Für rein optisches Schalten von Nachrichtensignalen, das auch als photonisches Schalten bezeichnet wird, bestehen derzeit mehrere Ansätze. Als besonders aussichtsreich werden derzeit insbesondere optische Schaltmatrizen auf Basis der sogenannten MEM-Technologie angesehen. Das englische Akronym MEM steht dabei für "Micro Electro-Mechanical Systems" und bezeichnet eine Anordnung, bei der bewegliche Miniaturspiegel zu einem zwei- oder dreidimensionalen Array angeordnet werden. Jeder einzelne Miniaturspiegel des Arrays ist dabei so ansteuerbar und positionierbar, daß er ein optisches Signal von einem Eingang auf einen ausgewählten Ausgang umlenkt. Einen Überblick über die MEM-Technologie gibt der Artikel "MEMS Brings New Solutions to Photonic Switching" von M. Fernandez und E. Kruglick, erhältlich im Internet unter http://www.omminc.com/technology/.

Neben dem Schalten selbst ist eines der schwierigsten Probleme bei diesem Ansatz die Überwachung der optischen Nachrichtensignale. Bislang wird ein optisches Nachrichtensignal überwacht, indem ein Teil des Lichtsignals als Überwachungssignal mit einem passiven Splitter abgezweigt wird und das Restsignal verstärkt und weitergeleitet wird. Um Signalverluste auszugleichen werden dabei aufwendige und kostspielige optische Verstärker wie Faserverstärker oder Halbleiterverstärker benötigt.

Es ist daher eine Aufgabe der Erfindung, die Signalüberwachung beim rein optischen Schalten von Nachrichtensignalen zu vereinfachen. Insbesondere besteht die Aufgabe der Erfindung darin, ein Verfahren zum Erzeugen eines Überwachungssignals anzugeben sowie einen Miniaturspiegel, eine optische Schaltmatrix und einen optischen Crossconnect, bei denen eine optische Signalüberwachung mit geringerem technischem Aufwand durchgeführt werden kann.

Die Aufgabe wird hinsichtlich des Miniaturspiegels dadurch gelöst, daß unter einer reflektierenden Schicht eine photoempfindliche Schicht angeordnet ist, die auf durch die reflektierende Schicht durchdringende Lichtanteile anspricht.

Der erfindungsgemäße optische Crossconnect enthält eine MEM-Schaltmatrix, die aus einer Vielzahl von jeweils im Lichtweg der einzelnen optischen Verbindungen angeordneten beweglichen Miniaturspiegeln besteht, wobei zumindest ein Teil der Miniaturspiegel jeweils eine unter einer lichtreflektierenden Schicht angeordnete photoempfindliche Schicht aufweisen, die auf durch die lichtreflektierende Schicht durchdringende Lichtanteile anspricht, um ein Überwachungssignal zu erzeugen.

Die erfindungsgemäße Schaltmatrix auf Basis der MEM-Technologie besteht aus einer Vielzahl beweglicher Spiegel, wobei zumindest ein Teil der Miniaturspiegel jeweils eine unter einer lichtreflektierenden Schicht angeordnete photoempfindliche Schicht aufweisen, die auf durch die lichtreflektierende Schicht durchdringende Lichtanteile anspricht, um ein Überwachungssignal zu erzeugen.

Hinsichtlich des Verfahrens wird die Aufgabe dadurch gelöst, daß zum Erzeugen eines Überwachungssignals beim rein optischen Schalten einer optischen Verbindung mittels eines Miniaturspiegels Lichtanteile, die durch eine lichtreflektierende Schicht des Miniaturspiegels durchdringen, detektiert werden.

Die Erfindung hat den Vorteil, daß geschaltete Lichtsignale nicht durch passive optische Splitter, die dem Abzweigen eines Überwachungssignals dienen, zusätzlich abgeschwächt werden. Dadurch können optische Verstärker eingespart werden und der maximale Abstand zwischen Signalregeneratoren wird vergrößert. Weitere vorteilhafte Ausgestaltungen sind den abhängigen Ansprüchen zu entnehmen.

Im folgenden wird die Erfindung anhand der Figuren 1 bis 3 in einem Ausführungsbeispiel beschrieben. Es zeigt:
- Figur 1:: Einen an sich bekannten Array aus Miniaturspiegeln,
- Figur 2:: einen erfindungsgemäßen Miniaturspiegel und
- Figur 3:: einen optischen Crossconnect.

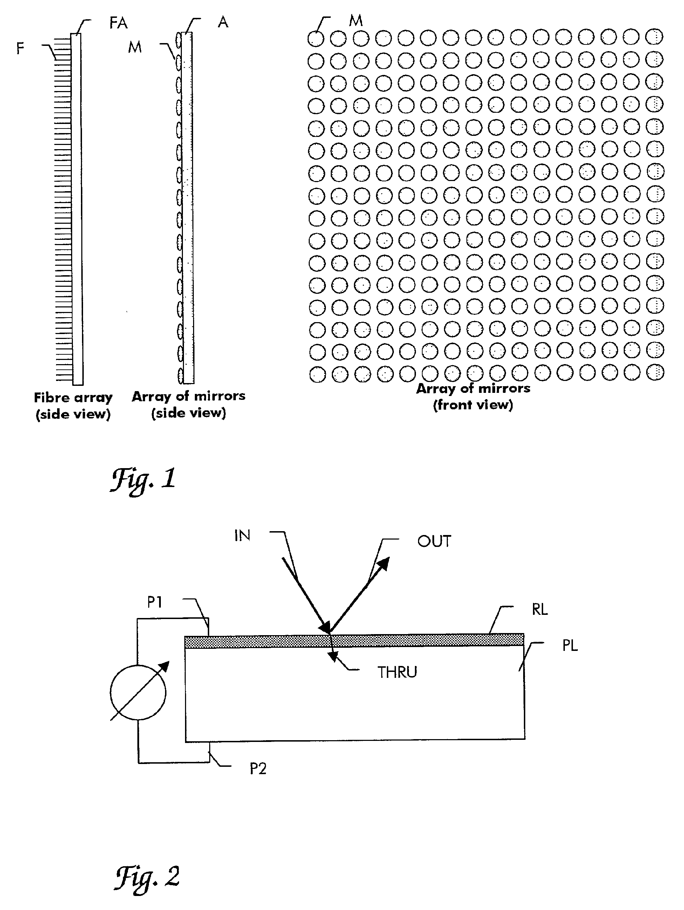

In Figur 1 ist das Prinzip einer MEM-Schaltmatrix dargestellt. Die Schaltmatrix A besteht aus einer Anzahl von Miniaturspiegeln M, die in einem zweidimensionalen Array angeordnet sind. Die Miniaturspiegel sind schwenkbar befestigt und einzeln ansteuerbar und positionierbar. Der Antrieb der Spiegel erfolgt elektrostatisch oder elektromagnetisch und wird von einer nicht gezeigten Steuerungseinrichtung gesteuert. Im rechten Teil der Figur 1 ist eine Draufsicht auf den Array aus Miniaturspiegeln M dargestellt. Links davon ist eine Seitenansicht zu sehen. Relativ zu der Schaltmatrix sind optische Fasern F in einem Faser-Array FA so justiert, daß Licht von einer beliebigen ersten Faser auf einen der Miniaturspiegel fällt und von diesem zu einer ausgewählten zweiten Faser reflektiert wird.

Ein Grundgedanke der Erfindung besteht nun darin, Lichtanteile, die ohnehin durch die reflektierende Beschichtung eines Miniaturspiegels hindurchdringen, als Überwachungssignal zu detektieren.

Dazu sind die Miniaturspiegel wie in Figur 2 gezeigt ausgebildet. Sie besitzen eine obere lichtreflektierende Beschichtung RL unter der eine photoempfindliche Schicht PL angeordnet ist. Bei der photoempfindlichen Schicht PL kann es sich beispielsweise um eine Halbleiterschicht mit einer ersten Dotierung handeln, die auf einem Substrat mit einer zweiten Dotierung aufgebracht ist, zu dem sie einen pn-Übergang aufweist und so eine Photodiode bildet. Lichtanteile THRU, die durch die reflektierende Schicht RL hindurchdringen, bewirken eine Photospannung am pn-Übergang, die an zwei Anschlüssen P1, P2 als Überwachungssignal abgegriffen werden kann. Vorteilhaft kann die reflektierende Schicht RL dabei gleichzeitig als Metallkontakt für den oberen Anschluß P1 dienen.

Die Erfindung macht sich zunutze, daß bei Reflektion an einem elektrisch leitenden Material stets ein Teil der Lichtwellen in den Reflektor eindringt. Vorteilhaft besteht die reflektierende Schicht RL daher aus einem guten elektrischen Leiter, der gleichzeitig ein sehr guter Reflektor ist, wie z.B. Silber. Der eindringende Lichtanteil wird genutzt, um die darunterliegende photoempfindliche Halbleiterschicht PL zu stimulieren und so einen Photostrom zu erzeugen, der proportional zur Feldstärke des einfallenden Lichtstrahls IN ist. Die Schichtdicke der reflektierenden Schicht RL ist in Abhängigkeit der Empfindlichkeit der photosensitiven Schicht PL zu wählen, und zwar so, daß durch ein einfallendes optisches Signal gerade ein ausreichend großer Photostrom erzeugt wird.

Da Überwachungssignale inhaltlich ausgewertet werden müssen, ist es erforderlich, diese als elektrische Signale zu erhalten. Vorteilhaft an der Erfindung ist, daß das Überwachungssignal gleich als elektrisches Signal vorliegt und somit keine O/E-Umwandlung notwendig ist. Typische Aufgaben, denen ein Überwachungssignal dient sind Fehlerüberwachung anhand von im Nachrichtensignal enthaltenen Prüfdaten, Auswertung von im Nachrichtensignal enthaltener Steuer- oder Signalisierungsinformationen z.B. zum Zwecke des Netzwerkmanagements oder die Überprüfung von Zieldressen.

Eine Vielzahl erfindungsgemäßer Miniaturspiegel werden zu einem Array gruppiert, der dann gleichzeitig als Schaltmatrix zum rein optisches Schalten optischer Signale dient sowie zur Erzeugung von elektrischen Überwachungssignalen. Schalt- und Überwachungsvorrichtung sind somit in einer einzigen Vorrichtung vereint. Dadurch werden zusätzliche Signalverluste durch die Signalüberwachung z.B. durch passive optische Splitter vermieden.

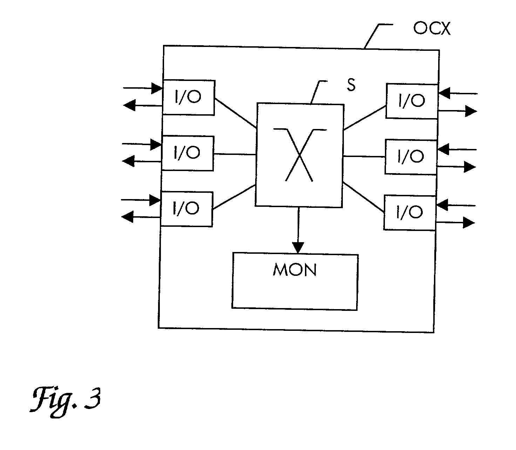

Der schematische Aufbau eines optischen Crossconnects OCX ist in Figur 3 dargestellt. Er besitzt eine Reihe von optischen Anschlußbaugruppen I/O. Diese empfangen und senden optische Signale. Dort werden die optischen Signale beispielsweise verstärkt, regeneriert und/oder einer sogenannten Forward-Error-Correction (FEC) unterzogen. Empfangene Signale werden einer zentralen optischen Schaltmatrix S zugeleitet. Bei der Schaltmatrix S handelt es sich um einen Array aus Miniaturspiegeln. Die Matrix dient dazu, jedes der empfangenen optischen Signale zu einem jeweiligen ausgewählten Ausgang zu schalten. Zumindest ein Teil der Spiegel ist erfindungsgemäß mit einer photoempfindlichen Schicht ausgestattet, die Lichtanteile detektiert, welche durch die darüberliegende reflektierende Schicht durchdringen. Auf diese Weise erzeugte elektrische Überwachungssignale werden von der Schaltmatrix an eine Überwachungseinrichtung MON geleitet. Die Überwachungseinrichtung MON führt die geschilderten Überwachungsfunktionen wie Fehlerüberwachung oder Auswertung von Steuer- oder Signalisierungsinformationen aus.

Die Überwachungseinrichtung MON kann anhand der Überwachungssignale auch beliebige andere Überwachungsfunktionen ausführen. Anhand des Überwachungssignals ist es z.B. möglich die Verstärkung von optischen Verstärkern im den optischen Anschlußbaugruppen I/O zu regeln, da wie bereits beschrieben das elektrische Überwachungssignal proportional zur Feldstärke des optischen Signals ist. Erkennt die Überwachungseinrichtung, daß ein Überwachungssignal schwächer als ein vordefinierter Schwellenwert ist, so regelt sie den optischen Eingangsverstärker in der Anschlußbaugruppe hoch, in der das zugehörige optische Signal empfangen wurde. Fehlt ein Überwachungssignal für einen der Miniaturspiegel ganz oder kann die Verstärkung am betreffenden Eingang nicht höher eingestellt werden, so erzeugt die Überwachungsschaltung einen entsprechenden Alarm, z.B. LOS (loss of signal). Anhand dieser Beispiele ist deutlich, daß dem Fachmann vielfältige Verwendungen des erfindungsgemäß erzeugten Überwachungssignals einfallen.

Selbstverständlich müssen nicht alle Miniaturspiegel der optischen Schaltmatrix des Crossconnects für die erfindungsgemäße Erzeugung von Überwachungssignalen ausgelegt sein. Wenn abhängig von der Bauart der Schaltmatrix ein zu schaltendes Nachrichtensignal an mehreren Miniaturspiegeln reflektiert wird bis es von einem Matrixeingang zu einem Matrixausgang gelangt, so reicht es natürlich aus, nur an einem der beteiligten Miniaturspiegel ein Überwachungssignal zu erzeugen. Vorteilhaft kann somit für jedes zu schaltende Nachrichtensignal ein einziges Überwachungssignal erzeugt und an die Überwachungseinrichtung MON geleitet werden.

## Patentansprüche

1. Miniaturspiegel zur Verwendung in einem optischen Crossconnect, mit einer lichtreflektierenden Schicht, **gekennzeichnet durch** eine unter der lichtreflektierenden Schicht angeordnete photoempfindliche Schicht, die auf **durch** die lichtreflektierende Schicht durchdringende Lichtanteile anspricht.

2. Miniaturspiegel nach Anspruch 1, bei dem die lichtreflektierende Schicht aus einem elektrisch gut leitenden Material besteht.

3. Miniaturspiegel nach Anspruch 1, bei dem die photoempfindliche Schicht aus einem Halbleiter besteht und die reflektierende Schicht gleichzeitig als Metallkontakt genutzt wird.

4. Optischer Crossconnect zum Schalten einer Vielzahl von optischen Verbindungen mit einer optischen MEM-Schaltmatrix, die aus einer Vielzahl von jeweils im Lichtweg der einzelnen optischen Verbindungen angeordneten beweglichen Miniaturspiegeln besteht, **dadurch gekennzeichnet, daß** zumindest ein Teil der Miniaturspiegel jeweils eine unter einer lichtreflektierenden Schicht angeordnete photoempfindliche Schicht aufweisen, die auf durch die lichtreflektierende Schicht durchdringende Lichtanteile anspricht, um ein Überwachungssignal zu erzeugen.

5. Schaltmatrix auf Basis der MEM-Technologie für einen optischen Crossconnect, wobei die Schaltmatrix aus einer Vielzahl beweglicher Spiegel besteht,**dadurch gekennzeichnet, daß** zumindest ein Teil der Miniaturspiegel jeweils eine unter einer lichtreflektierenden Schicht angeordnete photoempfindliche Schicht aufweisen, die auf durch die lichtreflektierende Schicht durchdringende Lichtanteile anspricht, um ein Überwachungssignal zu erzeugen.

6. Verfahren zum Erzeugen eines Überwachungssignals beim rein optischen Schalten einer optischen Verbindung in einem optischen Crossconnect mittels eines Miniaturspiegels, **dadurch gekennzeichnet, daß** Lichtanteile, die durch eine lichtreflektierende Schicht des Miniaturspiegels durchdringen detektiert werden, um das Überwachungssignal zu erzeugen.
